# EUROPEAN PATENT APPLICATION

(11) **EP 2 256 576 A1**
(43) Date of publication of application: **01.12.2010**
(21) Application number: 09290403.6
(22) Date of filing: 29.05.2009
(51) Int. Cl.: G05D 25/02, B23K 26/42, G01J 1/42

(54) **System for the calibration of operating parameters of a laser engraver**

(71) Applicant: Datacard Corporation, Minetonka, MN 55343-9015 (US)
(72) Inventor: Berthe, Benoît, 45000 Orleans (FR); Bielesch, Ulrich, 56132 Frücht (DE)
(74) Representative: Cabinet Plasseraud

(57) **Abstract**

The present invention concerns a system for the calibration of at least one parameter of a laser engraver, the laser engraver comprising on one hand an engraving system with a focusing lens positioned at a distance of the surface of an substrate intended to be engraved and on the other hand a vision system for at least the positioning and the verification of the engraving, the vision system including a camera associated with an appropriate illumination and, wherein the engraving device of the laser is arranged in such way that the engraving device works to engrave a substrate with specific engraved layout corresponding to variation of at least one parameter and wherein the vision system is connected to a comparison device of at least one measured engraved parameter with the template value of at least one stored data in a memorisation device connected to a engraving correction device.

## Description

The invention relates to the domain of devices and methods for the automation of the adjustment of operating parameters for laser engravers and more particularly for the calibration of colour levels, size and marking distance of laser engravers.

What is called the laser engraving is the practice of using lasers to engrave or mark an object. The technique can be very technical and complex, and often a computer system is used to control the engraving by a laser head. Despite this complexity, very precise and clean engravings can be achieved at a high rate. The technique does not involve tool bits which contact the engraving surface and wear out. This is considered an advantage over alternative engraving technologies where bit heads have to be replaced regularly. The impact of laser engraving has been more pronounced for specially-designed "laserable" materials. These include polymer and novel metal alloys. At least one property of these "laserable" materials is to have a color changing according to the amount of energy provided by the laser beam during the engraving operations. In situations where physical alteration of a surface by engraving is undesirable, an alternative such as "marking" is available.

Thus, one use of laser engravers is for the marking of applications such like plastic cards. The marking of these applications by laser can result in variable grey levels. This different grey levels variation may be obtained by a variation in point density. Another method to create different grey levels on the marking area may be the changing of the power level of the laser. However, other parameters influence the creation of these grey levels such as the material characteristics of the workpiece or the marking distance which may directly affect the size of the laser generated spots of the engraved structure. Consequently, the adjustment of the laser engraver needs to be done mainly according to grey levels, size and marking distance measured by the vision system of the laser engraver. This vision system participates for at least the positioning and the verification of the engraved application.

Up to now, the adjustment of the laser engraver and the calibrating of the vision system are done independently from each other and manually by successively running test cards. The results are measured and analysed concerning the values to be adjusted. These measurements lead to new parameters for the laser engraver respectively the vision system, which have to be proved by running and measuring additional test cards as described above. This procedure has to be repeated until a sufficient result has been achieved. However, this calibrating method takes time and effort when the adjustments of several laser engravers have to be done to get an identical result for each of them.

A first object of the present invention is to propose a system arranged to provide a time reduced calibration and effortless adjustment of a laser engraver with a better precision, this system being arranged to adjust identically the alignment of a plurality of laser engravers and further avoiding at least one defect or one disadvantage of the prior art of the invention.

This object is achieved by a system for the calibration of at least one parameter of a laser engraver, the laser engraver comprising on one hand an engraving system with a focusing lens positioned at a distance of the surface of an substrate intended to be engraved, the laserable substrate being made of at least one changing color component according to the energy provided by the laser engraver, and on the other hand a vision system for at least the positioning and the verification of the engraving, the vision system including a camera associated with an appropriate illumination and, wherein the engraving device of the laser is arranged in such way that the engraving device works to engrave a substrate with specific engraved layout corresponding to variation of at least one parameter and wherein the vision system is connected to a comparison device of at least one measured engraved parameter with the template value of at least one stored data in a memorisation device connected to a engraving correction device.

According to a variant of the invention, the system for the calibration of at least one parameter of a laser engraver is **characterised in that** the data stored in the memorisation device correspond to the values of at least one parameter memorised from an engraved calibration card used as a reference element and positioned at the place of the engraved substrate.

According to a realisation of this variant of the invention, the system for the calibration of at least one parameter of a laser engraver is **characterised in that** the calibration card provide a square pattern, each square of the pattern having a defined position and presenting a variation of at least one parameter different of at least one other square of the pattern.

According to an additional variant of the invention, the system for the calibration of at least one parameter of a laser engraver is **characterised in that** the parameter of the laser engraver is at least a grey level corresponding to the energy provided by the laser or a size of the engraving surface determine by the distance between laser head and the engraved substrate.

According to another variant of the invention, the system for the calibration of at least one parameter of a laser engraver is **characterised in that** the calibration of the marking distance is carried out by a working position test card comprising several grey patterns, each pattern having the same grey colour and the same value of dots-per-inch (dpi) but presenting an engraving at different marking distances between the focusing lens of the laser of the engraving system and the engraved substrate.

According to a first realisation of this variant of the invention, the system for the calibration of at least one parameter of a laser engraver is **characterised in that** the focal distance of the focusing lens is defined as the reference for the alignment of the engraving working position.

According to a second realisation of this variant of the invention, the system for the calibration of at least one parameter of a laser engraver is **characterised in that** a distance of the focusing lens relating to a local maximum of the darkness of a grey pattern element, when the marking distance is modified, is defined as the reference for the alignment of the engraving working position.

According to another variant of the invention, the system for the calibration of at least one parameter of a laser engraver is **characterised in that** the system comprises a device for positioning the engraved substrate in respect of an angle of the substrate during the engraving, to modify the influence of the illumination during exposure of the vision system onto the engraved substrate by providing a measurement of at least one parameter by the vision system according to a new angle.

According to a realisation of this variant of the invention, the system for the calibration of at least one parameter of a laser engraver is **characterised in that** the reference value of the stored data in the memorisation device connected to the vision system correction device are associated with an angle value corresponding to the angle of the position of the engraved substrate during the measurement operation.

A second object of the present invention is to provide a method for implementing at least one of the variant of the system of the invention.

This object is achieved by a method for the calibration of at least one parameter of a laser engraver using a system according to at least one of the variant of the system of the invention, wherein the method comprises at least:
- a step of engraving a substrate with specific engraved layout corresponding to variation of at least one parameter by the engraving device of the system,
- a step of measuring the value of the parameter of at least one pattern by the vision system according to a position angle of the substrate taken as a reference,
- a step of comparing at least one measured value with at least one template value stored in a memorisation device of the associated vision system,
- a step of adjusting at least the parameter of the engraving device according to the comparison result by the engraving correction device,
- a step of engraving a new substrate according to newly adjusted parameter, each time the measured value does not match with the template value stored in the memorisation device.

According to a variant of the invention, the method for the calibration of at least one parameter of a laser engraver is **characterised in that** the method comprises at least:
- a step of measuring and comparing the size of the pattern on the engraved substrate, or
- a step of measuring and comparing the grey level of the pattern on the engraved substrate.

According to a variant of the invention, the method for the calibration of at least one parameter of a laser engraver using a variant of the system of the invention, is **characterised in that** the method comprises at least:
- a step of checking whether all viewing angles are monitored,
- a step of modification of the position of the engraved substrate in respect of the angle of engraving , to modify the viewing angle of the vision system and the influence of the illumination onto the engraved substrate
- a step of measuring at least one parameter by the vision system according to a new angle.

According to a variant of the invention, the method for the calibration of at least one parameter of a laser engraver using a variant of the system of the invention, is **characterised in that** the method previously comprises at least:
- a step of engraving a working position test card comprising a pattern with at least one parameter needed for the alignment of the engraving system,
- a step of measuring and storing the value of the parameter of at least one pattern of the test card,
- a step of defining one stored parameter as the working position.

According to a particularity of this variant of the invention, the method for the calibration of at least one parameter of a laser engraver using a variant of the system of the invention, is **characterised in that** the method previously comprises at least:
- a step of engraving a working position test card comprising a pattern with several grey elements, each element of the pattern having the same grey level and the same value of dots-per-inch (dpi) but presenting an engraving at different marking distances between the focusing lens of an engraving system and engraved substrate to the vision system,
- a step of measuring the grey level of each engraved element of the test card,
- a step of storing the marking distance of the element presenting the most interesting grey level,
- a step of defining the stored marking distance as the working position.

According to a particularity of this variant of the invention, the method for the calibration of at least one parameter of a laser engraver using a variant of the system of the invention, is **characterised in that,** after the step of engraving a working position test card, the method comprises at least:
- a step of controlling that all elements are engraved,
- a step of increasing the distance between the focussing lens of the laser engraving system and the material in front of this lens according to programmed increment whether at least one element is missing,
- a step of renewing the engraving step.

Further, according to a first particularity of this variant of the invention, the method for the calibration of at least one parameter of a laser engraver using a variant of the system of the invention, is **characterised in that** the engraving working position is aligned to the marking distance of the element presenting the darkest grey level.

According to a second particularity of this variant of the invention, the method for the calibration of at least one parameter of a laser engraver using a variant of the system of the invention, is **characterised in that** the engraving working position is aligned to the focal distance of the focusing lens.

According to a third particularity of this variant of the invention, the method for the calibration of at least one parameter of a laser engraver using a variant of the system of the invention, is **characterised in that** the engraving working position is aligned to a distance of the focusing lens reaching a local maximum of the darkness, when the marking distance is modified.

According to a variant of the invention, the method for the calibration of at least one parameter of a laser engraver using a variant of the system of the invention, is **characterised in that** the method previously comprises at least:
- a step of storage of data in the memorisation device by positioning at the place of the engraved substrate an engraved calibration card used as a reference element with template values pattern for at least one parameter

The invention, with its characteristics and features, will appear clearer and illustrated with more details in the following description with reference to the attached figures in which:
- figure 1 is a diagram of a laser engraver with vision system showing an engraving position and a first position of the substrate with the vision system corresponding to the default position of the vision system,
- figure 2 is a diagram of a laser engraver with vision system showing a second position of the substrate with the vision system corresponding to a position of the work-piece according to an angle with the position of the substrate during the exposure to the vision system for an additional view by the camera of the system,
- figure 3 is a diagram of an example of calibration card for the adjustment of grey levels and size,
- figure 4 is a diagram of an example of engraving layout for the adjustment of the working position,
- figure 5 is a diagram of an example of an engraving result for the alignment of the working position after the engraving step,
- figure 6 is a flowchart of the method of the invention for the automated alignment at different angle and the adjustment of the several parameter,
- figure 7 is a flowchart of the method of the invention for the automated focus alignment,
- figure 8 is a diagram illustrating the grey level value depending on the marking distance of the engraving.

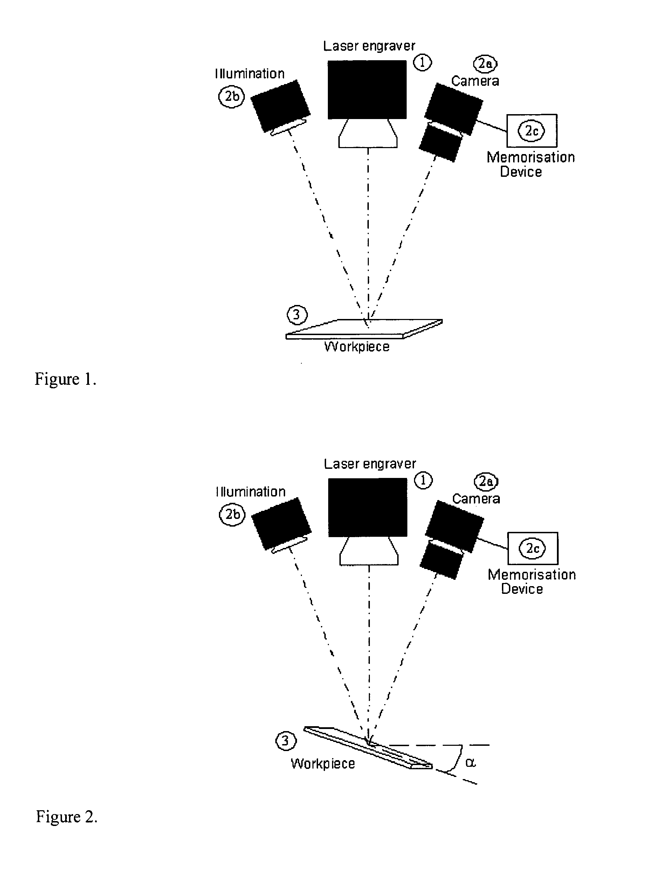

It will be readily understood that the components of the present invention, as generally described and illustrated in the several of the above references figures, may be arranged and designed in a wide variety of different configurations. Thus, the following more detailed description of the embodiments of the apparatus, system, and method of the present invention, as represented in figures 1 through 8, is not intended to limit the scope of the invention, as claimed, but is merely representative of selected embodiments of the invention.

Many of the functional units described in this specification have been labelled as devices, in order to more particularly emphasize their implementation independence. For example, a device may be implemented as a hardware circuit comprising custom VLSI circuits or gate arrays, off-the-shelf semiconductors such as logic chips, transistors, or other discrete components. A device may also be implemented in programmable hardware means such as field programmable gate arrays, programmable array logic, programmable logic means or the like.

Devices may also be implemented in software for execution by various types of processors. An identified device of executable code may, for instance, comprise one or more physical or logical blocks of computer instructions which may, for instance, be organized as an object, procedure, or function. Nevertheless, the executables of an identified device need not be physically located together, but may comprise disparate instructions stored in different locations which, when joined logically together, comprise the device and achieve the stated purpose for the device.

Indeed, a device of executable code could be a single instruction, or many instructions, and may even be distributed over several different code segments, among different programs, and across several memory means. Similarly, operational data may be identified and illustrated herein within devices, and may be embodied in any suitable form and organized within any suitable type of data structure. The operational data may be collected as a single data set, or may be distributed over different locations including over different storage means, and may exist, at least partially, merely as electronic signals on a system or network.

Reference throughout this specification to "one arrangement" or "an arrangement" means that a particular feature, structure, or characteristic described in connection with the arrangement is included in at least one arrangement of the present invention. Thus, appearances of the phrases "in one arrangement" or "in an arrangement" in various places throughout this specification are not necessarily all referring to the same arrangement.

Furthermore, the described features, structures, or characteristics may be combined in any suitable manner in one or more arrangements. In the following description, numerous specific details are provided, such as examples of programming, software devices, user selections, network transactions, database queries, database structures, hardware devices, hardware circuits, hardware chips, etc., to provide a thorough understanding of arrangements of the invention. One skilled in the relevant art will recognize, however, that the invention can be practiced without one or more of the specific details, or with other methods, components, materials, etc. In other instances, well-known structures, materials, or operations are not shown or described in detail to avoid obscuring aspects of the invention.

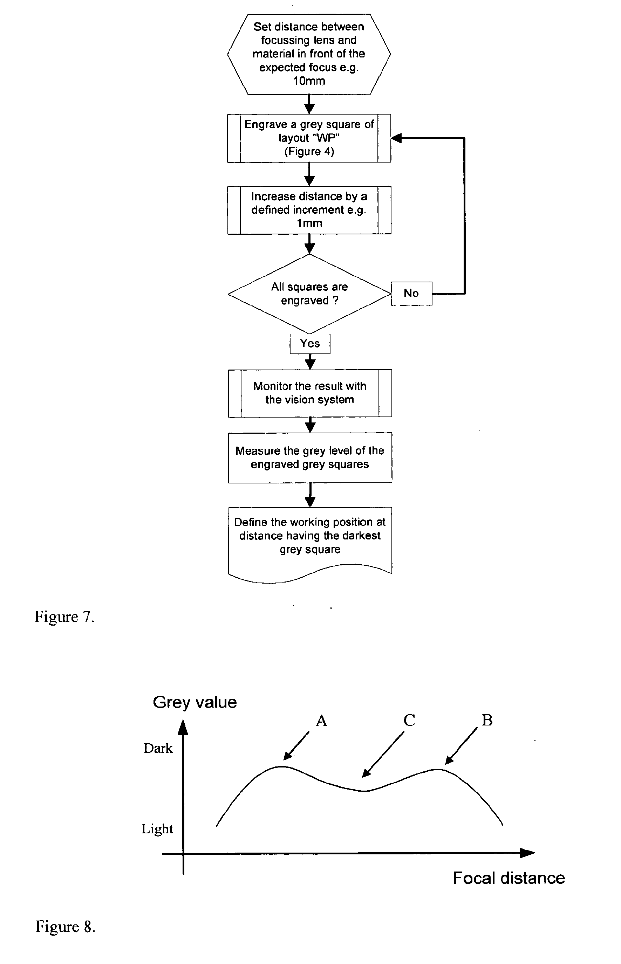

The present invention concerns the adjustment of grey levels, size and marking distance in a laser engraver (1) by varying the energy of the laser beam and the distance between the laser head and the substrate to be engraved with defined grey levels. The substrate used to be engraved by the laser engraving system of the invention has specific properties. In particular, this substrate is made of "laserable" material which is able to change its color according to the amount of energy provided by the laser beam during the engraving operations. Thus, the adjustment of grey level is obtained for controlling energy by varying the working distance separating the laser engraving head and the "laserable" substrate as detailed on the diagram shown by figure 8, or by varying the power settings when the working distance is kept aligned. The modification of the distance the laser head and the substrate is also a possibility to change the size of the grey spot or of the grey surface obtained onto the substrate.

The invention comprises an arrangement able to modify the energy of the laser beam or to vary the focus and the distance between laser head of the engraving laser and the surface of the substrate as shown with figure 1. Thus, the variation of energy of the laser or of distance is obtained by result of steps of the method implemented by such arrangement.

The laser engraver (1) usually comprises a vision system (2) which implements the positioning of the substrate (3) before the engraving process and the verification of the engraved substrate (3). This vision system (2) comprises at least a camera (2a) associated to an illumination device (2b) to provide an optimized view and lighting of the substrate (3) when measured. The vision system is connected to a memorisation device (2c) into which a database is stored. This database comprises values of at least one parameter used as references for the calibration of the laser engraver (1).

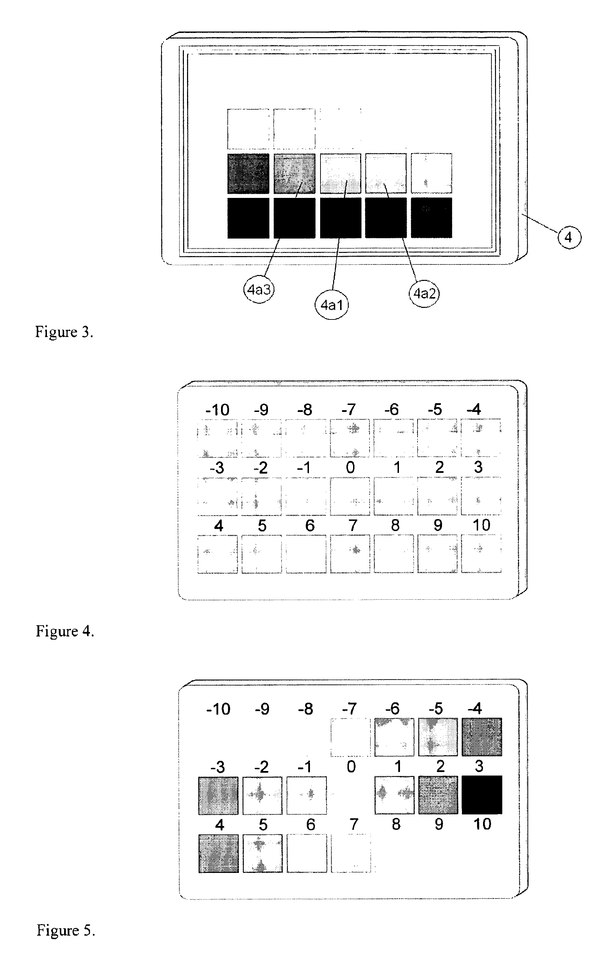

The storing of these reference values is carried out with a calibration card (4). This calibration card (4) is arranged to be positioned at the place of the engraved substrate (3) when the verification process is operating, in front and at a defined distance of the object lens of the vision system (2). The calibration card (4) is an engraved card that may be provided by a correctly calibrated laser engraver depending of the kind of parameter that has to be calibrated. Indeed, the alignment of working distance can be carried out without using a calibration card from an already aligned system, as the required position is determined by relative measurement within the engraved calibration card having a pattern as shown on figure 4. The working position is marked by a characteristic grey pattern relatively to the other grey level patterns of the same card. Different to that the alignment of grey level or the alignment of size needs a calibration card from an already aligned system. The vision system of the engraver in process records the data from this calibration card from the already aligned system and compares these values to the result of the engraver in process. This calibration card leads to the same results according to grey levels and size whereas the working distance of different engraver may be different.

The calibration card (4) comprises a pattern formed by a plurality of template arranged according to a layout like, for example, a square pattern. Each square (4a) of the pattern is defined by its position, referenced, for example, with a position number. Each element (4a1) of the pattern presents a variation of at least one parameter different of at least one other element (4a2) of the pattern. The variable parameter can be the grey level due to the level of energy delivered by the laser beam or the size of each engraved pattern (4a) depending on the focus distance separating the laser engraving head and the "laserable" substrate. This modification of the distance provides a possibility to change the size of the grey spot or of the grey surface obtained onto the substrate.

According to a particular arrangement of the calibration card (4), the card provide a square pattern wherein each square of the pattern provides an element which has a defined position that may be referenced, for example, by a position number.

When the calibration card (4) is disposed in front of the object lens of the vision system (2), the values of at least one parameter of the calibration card (4) are read and measured by the vision system and stored in the memorisation device (2c) to fill or complete the database of the memorisation device (2c).

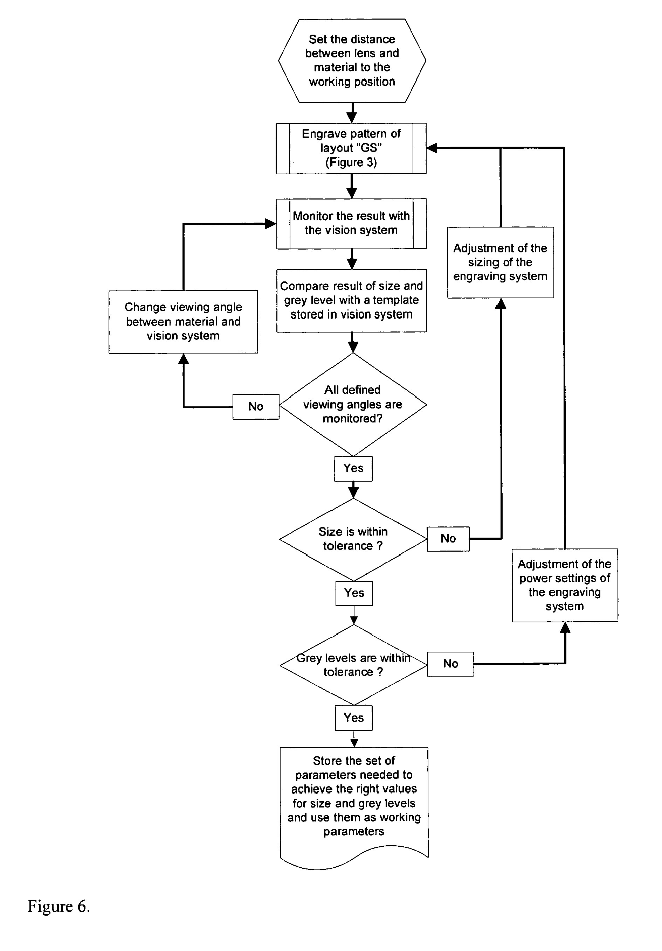

Once at least one parameter is stored in the memorisation device (2c), the adjustment of the laser engraver can be operated. The steps of the adjustment of this engraving are shown on figure 6. First, an engraving of a substrate is operated according to a particular programmed layout which is preferentially identical to the layout of the pattern of the calibration card (4). Next, the result of this engraving, what means this engraved substrate (3), is positioned in front of the object lens of the vision system (2), where its engraved surface is monitored, read and measured, in order to compare at least one parameter of the engraving with the stored data in the memorisation device (2c). The value of each element of the pattern, defined by its position, is compared with the value corresponding in the stored data to the same defined position.

After the comparison, if the comparison does not result into a correct matching of the measured parameter with the values of the template stored in the memorisation device (2c), the engraving system (1) is adjusted for the compared parameter. Thus, the size and the grey level of the pattern of the engraved substrate (3) are successively monitored and compared with the stored data in order to adjust this parameter or these parameters of the engraving system (1).

According to a particularity of the invention, the adjustment of the engraving system (1) is operated only when the result of this comparison is not within a range of tolerance.

When the adjustment of the parameter is operated for the engraving system (1), a new substrate is engraved by the laser. This new engraved substrate is then monitored according to the same way as for the first engraved substrate. These operations are repeated until the parameters for the engraving of the substrate are operated to match with the data stored in the memorisation device (2c) for this operation. Once the adjusted parameter correctly matches with the stored data, the adjustment of the parameter to the right values for the engraving system (1) is stored and used as working parameter.

According to a particularity of the invention, the system for the calibration of the laser engraver comprises a device to modify the positioning of the engraved substrate (3) in respect of at least one particular angle (α) of engraving during the exposure of the vision system. This particular positioning provides a modification of the illumination onto the engraved substrate (3) and consequently, modifies the monitoring of this engraved substrate (3). This modification in the monitoring of the engraved substrate (3) by the vision system provide a different set of measures for a same parameter and, thus, can avoid the influence of distortions caused by reflections due to the illumination onto the surface. However, as the values of the parameter are depending from the inclination and from the angle (α), the values stored in the memorisation device are registered according to a specific angle. Thus the comparison step is operated between the measured values and the corresponding values for the same angle (α) of inclination stored in the memorisation device (2c).

During the adjustment of the engraving system (1) parameters, the adjustment to the right values can be operated with precision according to the stored data function of the different values for the viewing angle. Consequently, the accuracy of the adjustment is enhanced. When a comparison step is carried out for a first value of angle, the system checks if another set of data for the adjusted parameter is stored in the memorisation device (2c). If not all stored viewing angles have been monitored, the viewing angle is changed between the vision system and the engraved substrate. Thus, the plurality of monitoring of a same parameter onto a same engraved substrate (3) according to several viewing angles (α) optimises the accuracy of the adjustment with a limited number of engraved substrate (3) after successive adjustments of the engraving system (1).

Previously to the calibration of the adjustment of a parameter such as the grey level or the size of the engraving, an alignment of the working distance of the laser engraver is preferentially operated. The steps for the alignment of the working distance are shown on the flow chart of figure 7. A first distance between the focussing lens of the laser engraving system and the substrate in front of this lens is used as a starting distance. A first substrate is marked by the laser engraving system according to a particular layout to provide a test card with the same grey level, the same size and the same dots-per-inch (dpi) value for each element (4a1) of the engraved pattern shown on figure 4. However, the engraving of each element of the test card has been operated with a different marking distance so that the resulting pattern appears with different grey levels (shown in figure 5) to the vision system due to the working position of the engraving system. Indeed, according to the variation of the grey level as a function of the marking distance, as shown on figure 8. When the laser engraving is operated with the same energy level and a short marking distance, the grey value increases by lengthen the marking distance until a local maximal value of darkness, referenced on figure 8 as point A. Further extending of the distance will result in decreasing darkness to a local minimal value, marked point C on figure 8 and corresponding to the focal distance F of the focusing lens, of the engraving system. The further increasing of the length of the marking distance results in a second local maximal value for the darkness, referenced as point B on figure 8.

Once the engraving of the test card is operated, a device controls whether that all squares or elements of the pattern are engraved. If at least one of them is missing, the distance between the focussing lens of the laser engraving system and the material in front of this lens is changed according to programmed increment. This increment can be a fixed distance or proportional to the missing part of the pattern. When all the elements of the pattern are engraved, the result of the engraving steps is monitored by the vision system to measure the grey level of each engraved element of the test card and the marking distance of the element presenting the appropriate grey level is stored to be defined as the working position.

According to a particularity of the process for the alignment of the engraving system, the step of monitoring the engraved test card can be operated according to several viewing angles (α), as previously explained.

At least one advantage of the system of the invention is that because of the storing of calibration data in the memorisation device of the vision system (2), the alignment and the adjustment of parameters of the engraving system can be re-operated in adequate periods in time.

It will be obvious for those skilled in the art that the present invention allows embodiments under many other specific forms without departing from the field of application of the invention as claimed. Therefore, the present embodiments have to be considered as an illustration but may be changed in the field defined by the scope of the appended claims.

## Claims

1. System for the calibration of at least one parameter of a laser engraver, the laser engraver comprising on one hand an engraving system with a focusing lens positioned at a distance of the surface of an substrate intended to be engraved, the laserable substrate being made of at least one changing color component according to the energy provided by the laser engraver, and on the other hand a vision system, wherein the engraving device of the laser is arranged in such way that the engraving device works to engrave a substrate with specific engraved layout corresponding to variation of at least one parameter and wherein the vision system is connected to a comparison device of at least one measured engraved parameter with the template value of at least one stored data in a memorisation device connected to a engraving correction device.

2. System for the calibration of at least one parameter of a laser engraver according to claim 1, wherein the data stored in the memorisation device correspond to the values of at least one parameter memorised from an engraved calibration card used as a reference element and positioned at the place of the engraved substrate.

3. System for the calibration of at least one parameter of a laser engraver according to claim 2, wherein the calibration card provide a square pattern, each square of the pattern having a defined position and presenting a variation of at least one parameter different of at least one other square of the pattern.

4. System for the calibration of at least one parameter of a laser engraver according to any of the previous claims, wherein the parameter of the laser engraver is at least a grey level corresponding to the energy provided by the laser or a size of the engraving surface determined by the distance between the laser head and engraved substrate.

5. System for the calibration of at least one parameter of a laser engraver according to any of the previous claims, wherein the calibration of the marking distance is carried out by a working position test card comprising several grey patterns, each pattern having the same grey colour and the same value of dots-per-inch (dpi) but presenting an engraving at different marking distances between the focusing lens of the laser of the engraving system and the engraved substrate.

6. System for the calibration of at least one parameter of a laser engraver according to claim 5, wherein the focal distance of the focusing lens is defined as the reference for the alignment of the engraving working position.

7. System for the calibration of at least one parameter of a laser engraver according to claim 5, wherein a distance of the focusing lens relating to a local maximum of the darkness of a grey pattern element, when the marking distance is modified, is defined as the reference for the alignment of the engraving working position.

8. System for the calibration of at least one parameter of a laser engraver according to any of the previous claims, wherein the system comprises a device for positioning the engraved substrate in respect of an angle of the substrate during the engraving, to modify the influence of the illumination during exposure of the vision system onto the engraved substrate by providing a measurement of at least one parameter by the vision system according to a new angle.

9. System for the calibration of at least one parameter of a laser engraver according to claim 8, wherein the reference value of the stored data in the memorisation device connected to the vision system correction device are associated with an angle value corresponding to the angle of the position of the engraved substrate during the measurement operation.

10. Method for the calibration of at least one parameter of a laser engraver using a system according to at least one of the claims 1 to 9, wherein the method comprises at least :
- a step of engraving a substrate with specific engraved layout corresponding to variation of at least one parameter by the engraving device of the system,
- a step of measuring the value of the parameter of at least one pattern by the vision system according to a position angle of the substrate taken as a reference,
- a step of comparing at least one measured value with at least one template value stored in a memorisation device of the associated vision system,
- a step of adjusting at least the parameter of the engraving device according to the comparison result by the engraving correction device,
- a step of engraving a new substrate according to newly adjusted parameter, each time the measured value does not match with the template value stored in the memorisation device.

11. Method for the calibration of at least one parameter of a laser engraver according to claim 10, wherein the method comprises at least :
- a step of measuring and comparing the size of the pattern on the engraved substrate, or
- a step of measuring and comparing the grey level of the pattern on the engraved substrate.

12. Method for the calibration of at least one parameter of a laser engraver according to claims 10 or 11 using a system according to at least one of the claims 8 or 9, wherein the method comprises at least :
- a step of checking whether all viewing angles are monitored,
- a step of modification of the position of the engraved substrate in respect of an angle with the positioning of the substrate during engraving, to modify the viewing angle by the vision system and the influence of the illumination onto the engraved substrate
- a step of measuring at least one parameter by the vision system according to a new angle.

13. Method for the calibration of at least one parameter of a laser engraver according to any of the previous claims, wherein the method previously comprises at least :
- a step of engraving a working position test card comprising a pattern with at least one parameter needed for the alignment of the engraving system,
- a step of measuring and storing the value of the parameter of at least one pattern of the test card,
- a step of defining one stored parameter as the working position.

14. Method for the calibration of at least one parameter of a laser engraver according to any of the previous claims, wherein the method previously comprises at least:
- a step of engraving a working position test card comprising a pattern with several grey elements, each element of the pattern having the same grey level and the same value of dots-per-inch (dpi) but presenting an engraving at different marking distances between the focusing lens of an engraving system and engraved substrate to the vision system,
- a step of measuring the grey level of each engraved element of the test card,
- a step of storing the marking distance of the element presenting the most interesting grey level,
- a step of defining the stored marking distance as the working position.

15. Method for the calibration of at least one parameter of a laser engraver according to claim 13 or 14, wherein after the step of engraving the working position test card, the method comprises at least:
- a step of controlling that all elements are engraved,
- a step of changing the distance between the focussing lens of the laser engraving system and the material in front of this lens according to programmed increment whether at least one element is missing,
- a step of renewing the engraving step.

16. Method for the calibration of at least one parameter of a laser engraver according to claims 13 to 15, wherein the engraving working position is aligned to the marking distance of the element presenting the darkest grey level.

17. Method for the calibration of at least one parameter of a laser engraver according to claims 13 to 15, wherein the engraving working position is aligned to the focal distance of the focusing lens.

18. Method for the calibration of at least one parameter of a laser engraver according to claims 13 to 15, wherein the engraving working position is aligned to a distance of the focusing lens reaching a local maximum of the darkness, when the marking distance is modified.

19. Method for the calibration of at least one parameter of a laser engraver according to any of the previous claims, wherein the method previously comprises at least :
- a step of storage of data in the memorisation device by positioning at the place of the engraved substrate an engraved calibration card used as a reference element with template values pattern for at least one parameter.
